(19) Europäisches Patentamt
European Patent Office
Office européen des brevets

(11) EP 1 580 197 A1

(12) **EUROPEAN PATENT APPLICATION**

(43) Date of publication:
**28.09.2005 Bulletin 2005/39**

(51) Int Cl.$^7$: **C08B 37/00**

(21) Application number: **04290790.7**

(22) Date of filing: **24.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(71) Applicant: **Aventis Pharma S.A.**
**92160 Antony (FR)**

(72) Inventors:
- **Mourier, Pierre**
**94220 Charenton Le Pont (FR)**
- **Viskov, Christian**
**91130 Ris Orangis (FR)**

(74) Representative: **Rousseau, Pierrick Edouard et al**
**Aventis Pharma S.A.**
**Direction des Brevets,**
**Tri LEO/144**
**20, avenue Raymond Aron**
**92165 Antony Cedex (FR)**

(54) **Method for quantitatively determining specific groups constituting heparins or low molecular wieght heparins using HPLC**

(57) A method for analysing heparins or low-molecular-weight heparins, characterized in that the sample to be assayed is depolymerized by the action of heparinases and then, where appropriate, the depolymerizate obtained is reduced and then an analysis is carried out by high performance liquid chromatography.

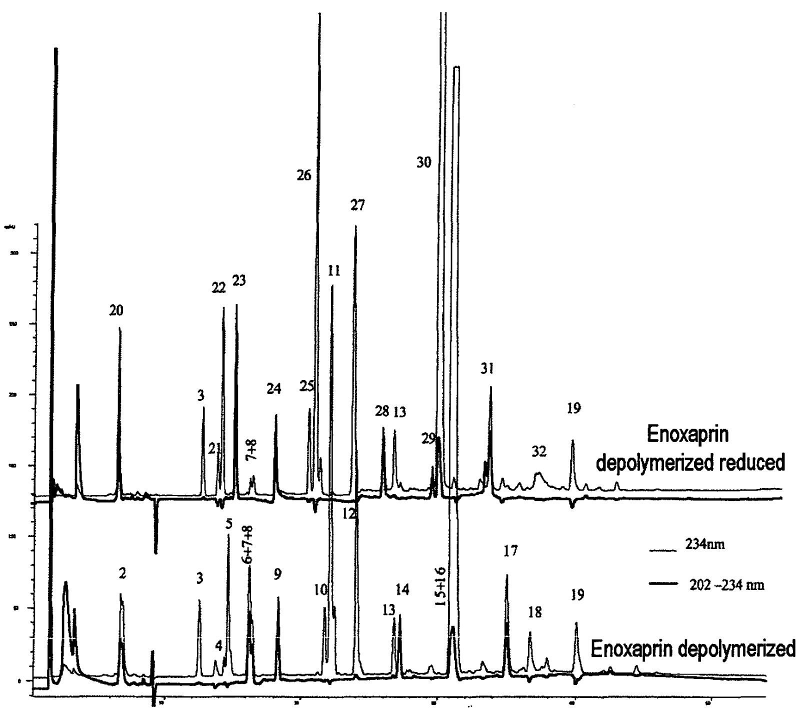


**Figure 2**

EP 1 580 197 A1

## Description

An embodiment of the present invention is a method for detecting or quantifying the amount of components having a 1-6 anhydro structure or acetylated sugars in a sample of fractionated heparins or unfractionated heparins.

Heparins are biologically active agents of the glycosaminoglycan family, extracted from natural sources, and have valuable anticoagulant and antithrombotic properties. In particular, they are useful in the treatment of postoperative venous thromboses.

To create low molecular weight heparins (LMWH) from source heparin, the longer heparinic polysaccharide chains must be broken down into shorter chains of lower molecular weight. This can be done by either chemical or enzymatic depolymerization. The result can be average molecular weights for LMWH polysaccharide chains of approximately 5,000 Da. LMWHs, like unfractionated heparin, inhibit coagulation by binding to ATIII at particular pentasaccharide sequences distributed along some of the polysaccharide chains.

Each LMWH manufacturer of an approved product utilizes a distinct depolymerization process. Unless two manufacturers use the same process, this process distinction results in LMWHs with distinct chemical structures and, therefore, differing pharmacological activity and different approved indications for clinical use. The resulting LMWHs are structurally differentiated by the depolymerization processes used for their manufacture (R.J. Linhardt et al., *Seminars in Thombosis and Hemostatis* 1999; 25(3 Supp.): 5-16). As a result, LMWHs are more heterogeneous than heparin. Each different process causes unique and highly complex structural modifications to the polysaccharide chains. These modifications include differences in chain lengths and chain sequences, as well as in structural fingerprints. Consequently, the different LMWHs may have distinctive pharmacological profiles and different approved clinical indications.

Enoxaparin sodium is available from Aventis and sold in the United States in the form of enoxaparin sodium injection, under the trademark Lovenox® (Clexane® in some other countries). In general, enoxaparin sodium is obtained by alkaline degradation of heparin benzyl ester derived from porcine intestinal mucosa. Its structure is characterized, for example, by a 2-0-sulfo-4-enepyranosuronic acid group at the non-reducing end and a 2-N,6-0-disulfo-D-glucosamine at the reducing end of the chain. The average molecular weight is about 4500 daltons. The molecular weight distribution is:

| | |
|---|---|
| <2000 daltons | ≤20% |
| 2000 to 8000 daltons | ≥68% |
| >8000 daltons | ≤18% |

In the manufacture of enoxaparin sodium, there is a 6-O-desulfation of the glucosamine, leading to the formation of derivatives called "1,6 anhydro" (International Patent Application WO 01/29055), as shown below :

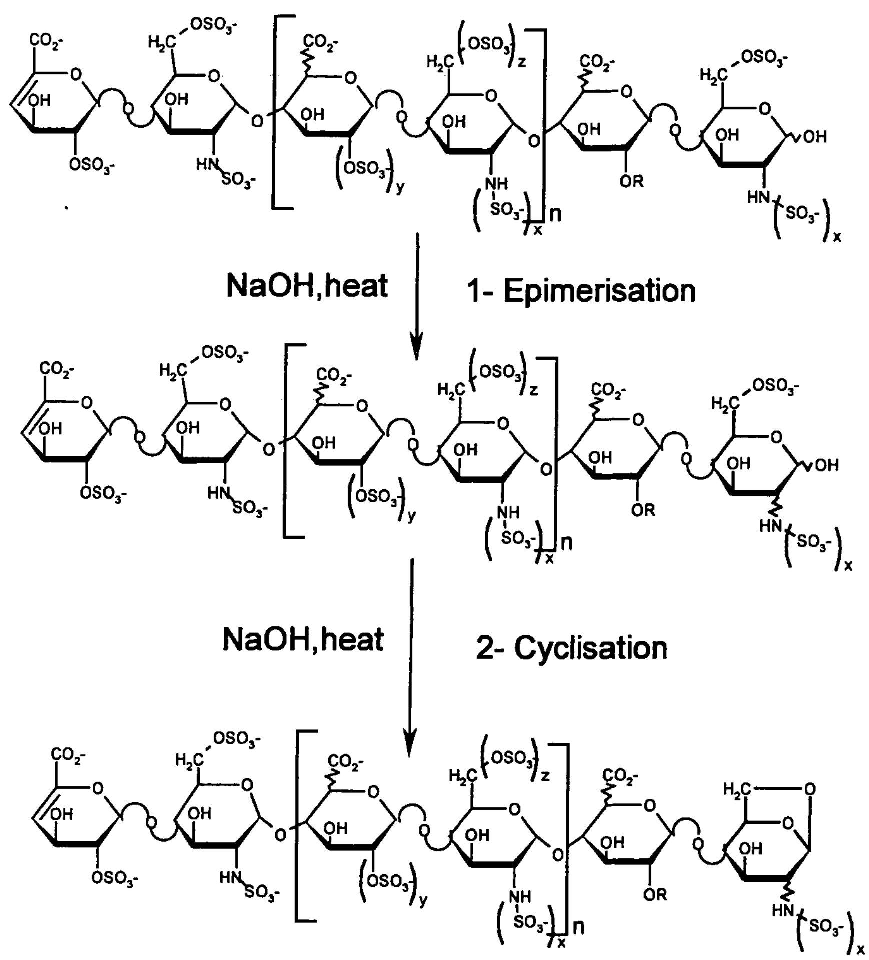


This type of derivative is only obtained for oligosaccharide chains whose terminal glucosamine is 6-O-sulfated.

The percentage of oligosaccharide chains whose end is modified with a 1,6-anhydro bond is a structural characteristic of the oligosaccharide mixture of enoxaparin sodium and it should be possible to measure it. Based on current knowledge, between 15% and 25% of the components of enoxaparin sodium have a 1,6-anhydro structure at the reducing end of their chain.

An embodiment of the present invention therefore provides a method for analysing unfractionated heparins and fractionated heparins. "Fractionated heparins" as used herein refers to any heparin that undergoes depolymerization, for example low-molecular-weight heparins (LMWH), including enoxaparin sodium and any LMWH seeking approval by a regulatory authority pursuant to an application citing Lovenox®/ Clexane® (enoxaparin sodium injection) as the listed drug.

In one embodiment, the method of analysis according to the invention is the following:

The sample to be assayed is depolymerized by the action of heparinases and then, where appropriate, the depolymerizate obtained is reduced and then analysis is carried out by high-performance liquid chromatography.

The method as defined above is therefore characterized in that the depolymerizate is analysed to detect the presence of oligosaccharide chains whose end is modified with a 1,6-anhydro bond ("1,6-anhydro groups").

In a related embodiment, the sample to be assayed is first exhaustively depolymerized with a mixture of heparinases, for example, heparinase 1 (EC 4.2.2.7.), heparinase 2 (heparin lyase II) and heparinase 3 (EC 4.2.2.8.), for example with each heparinase being present as 0.5 units/ml. (These enzymes are marketed by the group Grampian Enzymes).

A subject of the invention is therefore a method for analysing unfractionated heparins or fractionated heparins, comprising the following steps:

(a) depolymerization of the sample by the action of heparinases
(b) where appropriate, reduction of the depolymerizate
(c) analysing the sample of step (a) or (b) by high-performance liquid chromatography.

In one embodiment, the subject of the invention is the method as defined above, wherein the heparinases are in the form of a mixture of heparinase 1 (EC 4.2.2.7.), heparinase 2 (heparin lyase II), and heparinase 3 (EC 4.2.2.8.).

The depolymerizate thus prepared may then be treated to reduce the reducing ends that are not in the 1,6-anhydro form (products described in patent application WO 01/72762). In one embodiment, the depolymerizate may be treated with an $NaBH_4$ solution in sodium acetate to reduce the reducing ends that are not in the 1,6-anhydro form. Finally, in order to be able to quantify the disaccharides 1 and 2 described below, the sample of low-molecular-weight heparin, depolymerized with heparinases, may be reduced by the action of a reducing agent such as $NaBH_4$.

A subject of the invention is therefore the method as defined above, wherein the depolymerized heparin is then reduced.

A subject of the invention is additionally the method as defined above, wherein the reducing agent is $NaBH_4$. Other alkali metal salts of borohydride, such as lithium or potassium, may also be used.

The methods of assay according to the invention make it possible to clearly differentiate enoxaparin sodium from other low-molecular-weight heparins which do not contain "1,6-anhydro" derivatives. Conversely, the methods of the invention make it possible to ascertain that low-molecular-weight heparins do not have the physicochemical characteristics of enoxaparin sodium and therefore are different in nature.

The methods according to the invention may, for example, be applied to the industrial process during in-process control of samples in order to provide standardization of the process for manufacturing enoxaparin sodium and to obtain uniform batches.

After enzymatic depolymerization and optional reduction of the reducing ends, the 1,6-anhydro derivatives of enoxaparin sodium exist in 4 essential forms, namely disaccharide 1, disaccharide 2, disaccharide 3, and tetrasaccharide 1. A subject of the invention is therefore also the method as described above, wherein the 1,6-anhydro residues obtained during the depolymerization reaction include the following:

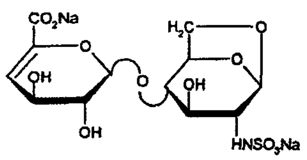

disaccharide 1

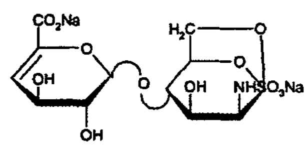

disaccharide 2

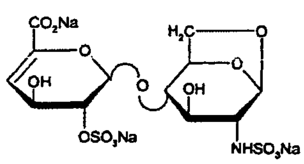

disaccharide 3

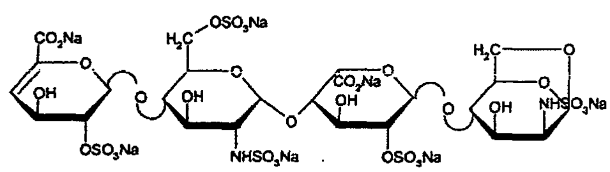

tetrasaccharide 1

All the oligosaccharides or polysaccharides that contain the 1,6-anhydro end on the terminal disaccharide unit and that do not possess a 2-O-sulfate on the uronic acid of said terminal disaccharide are completely depolymerized by the heparinases and are in the form of the disaccharides 1 and 2. On the other hand, when the terminal saccharide contains a 2-O-sulfate on the uronic acid and when it is in the mannosamine form, the 1,6-anhydro derivative is in the form of tetrasaccharide 1 (form resistant to heparinases).

Trisaccharide 1 (see below) may also be present in the mixture. It is derived from another degradation process that leads to the structure below (peeling phenomenon observed during the chemical depolymerization of enoxaparin sodium).

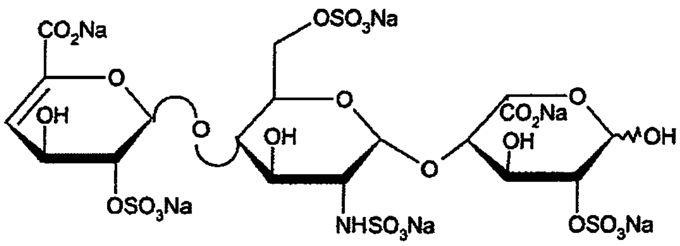

**trisaccharide 1**

The other constituents of the mixture are not characteristic solely of enoxaparin sodium. There are of course the 8 elementary disaccharides of the heparin chain. These 8 elementary disaccharides are marketed inter alia by the company Sigma.

Other disaccharides were identified in the mixture by the method according to the invention: the disaccharides $\Delta IIS_{gal}$ and $\Delta IVS_{gal}$, which have as their origin alkaline 2-O-desulfation of -IdoA(2S)-GlcNS(6S)- and of -IdoA(2S)-Glc-NS-, leading to the formation of 2 galacturonic acids. They are not usually present in the original structure of heparin (U.M. Desai et al., Arch. Biochem. Biophys., 306 (2) 461-468 (1993)).

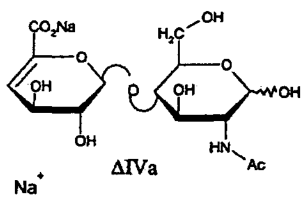

ΔIVa

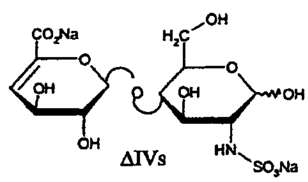

ΔIVs

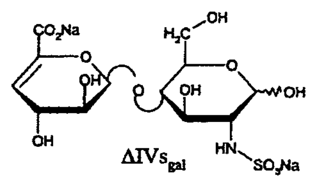

$\Delta IVs_{gal}$

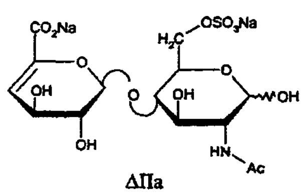

ΔIIa

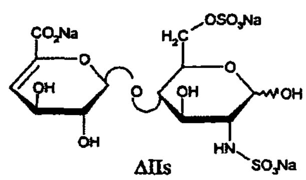

ΔIIs

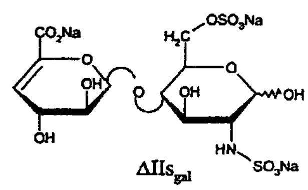

$\Delta IIs_{gal}$

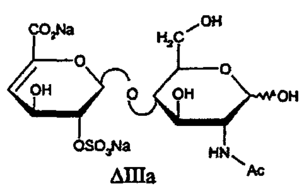

ΔIIIa

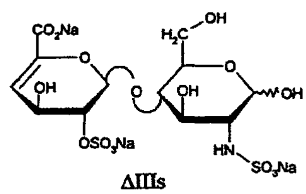

ΔIIIs

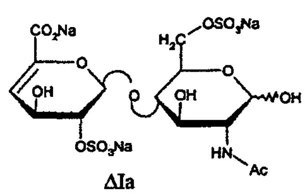

ΔIa

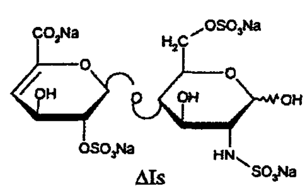

ΔIs

Oligosaccharides containing 3-O-sulfated glucosamines withstand cleavage by heparinases and remain present in the form of tetrasaccharides.

In the case of most low-molecular-weight heparins, the heparin is extracted from pig mucusa, and these principal tetrasaccharides are represented below. These tetrasaccharides are resistant to enzymatic depolymerization and reflect the sequences with affinity for antithrombin III. These tetrasaccharides are symbolized as follows: $\Delta$IIa-$\underline{\text{IIS}}_{glu}$ and $\Delta$IIa-$\underline{\text{IVS}}_{glu}$. (S. YAMADA, K. YOSHIDA, M. SUGIURA, K-H KHOO, H.R. MORRIS, A. DELL, J. Biol. Chem.; 270 (7), 4780-4787 (1993)).

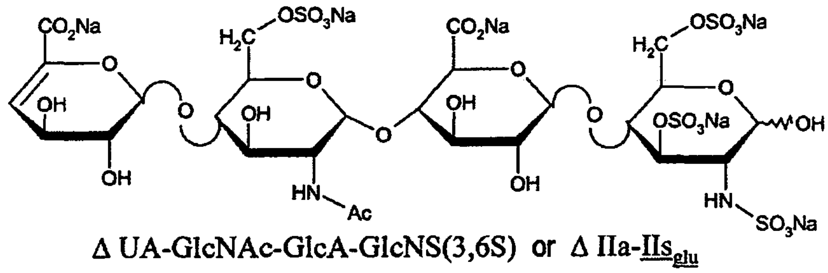

$\Delta$ UA-GlcNAc-GlcA-GlcNS(3,6S) or $\Delta$ IIa-$\underline{\text{IIs}}_{glu}$

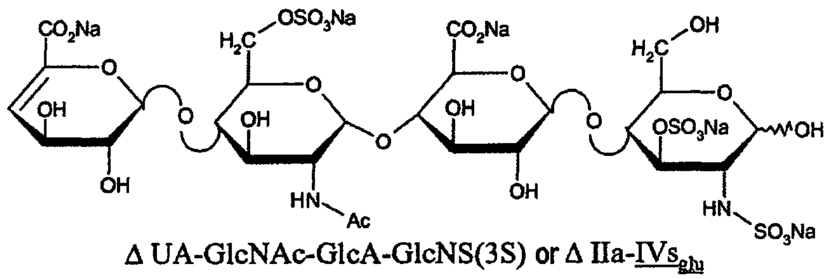

$\Delta$ UA-GlcNAc-GlcA-GlcNS(3S) or $\Delta$ IIa-$\underline{\text{IVs}}_{glu}$

The final constituent of the mixture cleaved with heparinases is the glycoserine end $\Delta$GlcA-Gal-Gal-Xyl-Ser (K. Sugahara, et al., J. Biol. Chem.; 270(39), 22914-22923 (1995); K. Sugahara, et al.; J. Biol. Chem.; 267(3), 1528-1533 (1992)). The latter is generally almost absent from enoxaparin sodium (see NMR in Example 5).

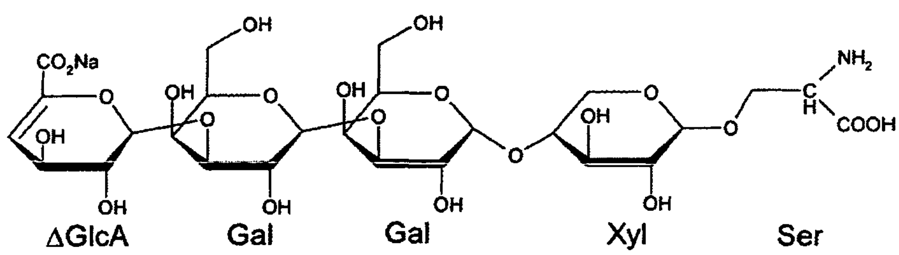

$\Delta$GlcA Gal Gal Xyl Ser

In another aspect, the invention provides a chromatography process for detecting 1,6-anhydro groups. In one embodiment, the method involves separating the various oligosaccharides obtained after depolymerization and optionally treatment with a reducing agent such as $NaBH_4$.

The separation of the various oligosaccharides according to the present invention, may be carried out by HPLC (High Performance Liquid Chromatography). In one embodiment, the HPLC is anion-exchange chromatography. In a related embodiment, the anion-exchange chromatography is strong anion exchange chromatography (SAX).

As used herein, the term "strong anion exchange chromatography" (SAX) encompasses anion exchange chromatography conducted on any resin that maintains a constant net positive charge in the range of about pH 2-12. In certain embodiments of the invention, strong anion exchange chromatography uses a solid support functionalized with quaternary ammonium exchange groups. For example, columns such as Spherisorb® SAX (Waters Corp, Milford MA) may be used having particle size of about 5 µm, a column length of about 25 cm and a column diameter of between about 1 mm and about 4.6 mm may be used.

The equipment used may be any chromatograph that allows the formation of an elution gradient and that is equipped with a suitable UV detector that is suitable for selective detection of acetylated sugars. In one embodiment

of the invention, the UV detector is an array of diodes that permits the generation of UV spectra of the constituents and allows complex signals resulting from the difference between the absorbance at 2 different wavelengths to be recorded. Such a diode array detector allows the specific detection of acetylated oligosaccharides. In a related embodiment, HPLC mobile phases that are transparent in the UV region up to 200 nm are used.

In this embodiment, conventional mobile phases based on NaCl, which have the additional disadvantage of requiring a passivated chromatograph in order to withstand the corrosive power of the chlorides, are excluded. Mobile phases that can be used according to this embodiment of the invention include, but are not limited to, mobile phases based on sodium perchlorate, methanesulfonate or phosphate salts. In one embodiment, the mobile phase is an aqueous solution of ammonium methane sulfonate.

A subject of the invention is therefore also a method of analysis as defined above by separation by anion-exchange chromatography, wherein a mobile phase that is transparent in the UV region from about 200 nM to about 400nM is used.

In certain embodiments, the strong anion chromatography separation is performed at a pH from about 2.0 to about 6.5. In a related embodiment, a pH in the region of about 3 will be used. The pH may be controlled, for example, by adding a salt to the mobile phase which possesses a buffering power at pH = 3. In certain embodiments of the invention, a salt such as a phosphate salt, which has greater buffering capacity at pH 3 than that of perchlorates, is used. Exemplary chromatographic separation conditions are given below:

Mobile Phase:

Solvent A: $NaH_2PO_4$, 2.5 mM, brought to pH 2.9 by adding $H_3PO_4$
Solvent B: $NaClO_4$ in 1 N $NaH_2PO_4$ , 2.5 mM, brought to pH 3.0 by adding $H_3PO_4$

The elution gradient may be the following:

T = 0 min: %B = 3; T = 40 min: %B = 60; T = 60 min: %B = 80

A suitable temperature, e.g. from about 40°C to about 50°C, and pump flow rate is chosen according to the column used.

Other methods of purifying samples by SAX chromatography are known to those skilled in the art. For example, SAX methods are described by K. G. Rice and R. J. Linhardt, Carbohydrate Research 190, 219-233 (1989); A. Larnkjaer, et al., Carbohydrate Research, 266, 37-52 (1995); and in patent WO 90/01501 (Example 2). The contents of these references are incorporated herein in their entirety.

Another aspect of the invention is a method of detecting specific groups found in unfractionated heparins or fractionated heparins.

In one embodiment, this method increases the specificity of the UV detection of heparin or LMWH groups. As nonacetylated polysaccharides all have, at a given pH, a fairly similar UV spectrum, it is possible to selectively detect the acetylated sugars by taking as signal the difference between the absorbance at 2 wavelengths chosen such that the absorptivity of the nonacetylated saccharides is canceled out.

As illustrated below by way of example, 202 nm and 230 nm may be chosen as detection and reference wavelengths and the 202-230 nm signal may be recorded. A person skilled in the art would appreciate that the choice of wavelength that can be used according to the present invention will depend on the pH of the mobile phase (adjustments of a few nm may be necessary so as to be at the optimum of the pH).

Any UV detector that can simultaneously measure absorbance at two or more wavelengths may be used in the invention. In one embodiment of the invention, the DAD 1100 detector from the company Agilent Technologies is used. In this embodiment, a double detection will be carried out at 234 nm, on the one hand, and at 202-230 nm, on the other hand. The principle of selective detection of acetylated oligosaccharides is illustrated in Figure 1 in which the UV spectrum of a sulfated disaccharide ΔIs is compared with that of an acetylated disaccharide ΔIa.

A subject of the present invention is therefore also a method of analysis as defined above, wherein the method of detection makes it possible to selectively detect acetylated sugars.

In certain embodiments, the method of analysis uses separation by SAX chromatography, and acetylated sugars are selectively detected by measuring the difference between the absorbance at two wavelengths chosen such that the absorptivity of the nonacetylated saccharides is cancelled out.

The quantification of the four 1,6-anhydro residues described above requires a sufficient selectivity of the chromatographic system in relation to all the other constituents of the mixture. However, the two disaccharides 1 and

2, which are co-eluted in general, are poorly resolved with respect to ΔIIa, especially as the latter is present in the form of its two $\alpha$ and $\beta$ anomers.

The identity of the two disaccharides 1 and 2 may be easily verified because they form in a few hours at room temperature in an aqueous solution of ΔIIs brought to pH 13 by adding NaOH. However, if double detection is used, the acetylated oligosaccharides ΔIVa, ΔIIa, ΔIIIa, ΔIa, ΔIIa-$\underline{IVs}_{glu}$ $\underline{and}$ ΔIIa-$\underline{IIs}_{glu}$ are easily identifiable.

The causes of splitting of the peaks are the anomeric forms, on the one hand, and to a lesser degree the glucosamine ↔ mannosamine epimerization which is partially present for ΔIIs, ΔIIIs and ΔIs when they are in the terminal position in the oligosaccharide chain.

In certain embodiments of the invention the disaccharides 1 and 2 are quantified by reducing the sample of low-molecular-weight heparin, previously depolymerized by heparinases, via the action of $NaBH_4$.

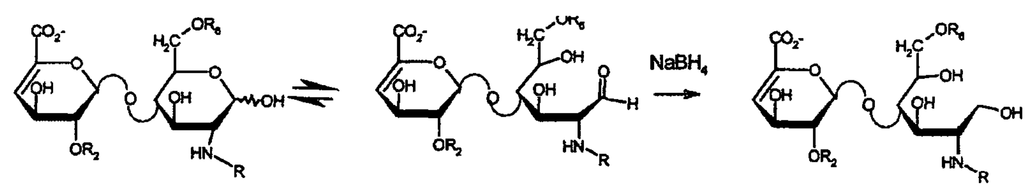


α anomer + β anomer

This reduction has the advantage of eliminating the $\alpha \rightarrow \beta$ anomerisms by opening the terminal oligosaccharide ring. The chromatogram obtained is simpler since the anomerisms are eliminated. Moreover, the reduction of ΔIIa reduces its retention on the column and allows easy assay of the disaccharides 1 and 2.

The examples of chromatograms described in Figures 2 and 3 clearly illustrate these phenomena and the advantages of this method.

## BRIEF DESCRIPTION OF THE DRAWINGS

Figure 1 illustrates the selective detection of acetylated oligosaccharides in which the UV spectrum of a sulfated disaccharide ΔIs is compared with that of an acetylated disaccharide ΔIa, wherein the x-axis represents wavelength (nm) and the y-axis represents absorbance (mAmps).

Figure 2 shows the chromatographic separation of enoxaparin depolymerized with heparinases before and after reduction with $NaBH_4$ (signal in fine black: UV at 234 nm; signal in thick black: UV at 202-234 nm) , wherein the x-axis elution time (mins) and the y-axis represents absorbance (mAmps).

Figure 3 shows the chromatographic separation of heparin depolymerized with heparinases before and after reduction with $NaBH_4$ (signal in fine black: UV at 234 nm; signal in thick black: UV at 202-234 nm), wherein the x-axis elution time (mins) and the y-axis represents absorbance (mAmps).

## EXAMPLES

The examples below are intended to illustrate various features of the invention. One skilled in the art will appreciate that the invention is not limited to the embodiments exemplified below.

### Example 1: General Description of Enzymatic depolymerization

The following is a general description on how enzymatic depolymerization is performed and could be used in the present invention.

The enzymatic dep olymerization is carried out for 48 hours at room temperature by mixing 50 µl of a solution containing 20 mg/ml of enoxaparin sodium to be assayed, 200 µl of a 100 mM acetic acid/NaOH solution at pH 7.0 containing 2 mM calcium acetate and 1 mg/ml of BSA with 50 µl of the stock solution of the 3 heparinases. The heparinases are stored at -30°C. The heparinases are in a buffer solution and the titer for each heparinase is 0.5 IU/ml (composition of the buffer solution: aqueous solution pH 7 of $KH_2PO_4$ at a concentration of 0.01 mol/l and supplemented with bovine serum albumin (BSA) at 2 mg/ml).

The reduction is carried out on 60 µl of the product depolymerized with the heparinases by adding 10 µl of a 30 g/l $NaBH_4$ solution in 100 mM sodium acetate prepared immediately before use.

**Example 2:**

NMR of Disaccharide 3 obtained according to the general description of Example 1

Proton spectrum in $D_2O$, 400 MHz, T=298K, δ in ppm: 3.34 (1H, dd, J=7 and 2Hz, H2), 3.72 (1H, t, J=8Hz, H6), 3.90 (1H, m, H3), 4.03 (1H, s, H4), 4.20 (1 H, d, J=8Hz, H6), 4.23 (1 H, t, J=5Hz, H3'), 4.58 (1 H, m, H2'), 4.78 (1 H, m, H5), 5.50 (1H, s, H1), 5.60 (1H, dd, J=6 and 1Hz, H1'), 6.03 (1H, d, J=5Hz, H4')].

**Example 3**

NMR of Tetrasaccharide 1 obtained according to the general description of Example 1

Proton spectrum in $D_2O$, 400 MHz, T=298K, δ in ppm: 3.15 (1H, s, H2), 3.25 (1H, m, H2"), 3.60 (1H, m, H3"), between 3.70 and 4.70 (14H, unresolved complex, H3/H4/H6, H2'/H3'/H4'/H5', H4"/H5"/H6", H2'"/H3'"), 4.75 (1H, m, H5), between 5.20 and 5.40 (2H, m, H1' and H1"), 5.45 (1H, m, H1'"), 5.56 (1H, m, H1), 5.94 (1H, d, J=5Hz, H4)

**Example 4**

NMR of the Trisaccharide 1 obtained according to the general description of Example 1

Spectrum in $D_2O$, 600 MHz, (δ in ppm): 3.28 (1H, m), 3.61 (1H, t, 7Hz), 3.79 (1H, t, 7Hz), 3.95 (1H, d, 6Hz), 4.00 (1H, s), 4.20 (1H, m), 4.28 (2H, m), 4.32 (1H, d, 4Hz), 4.41 (1H, s), 4.58 (1H, s), 4.61 (1H, s), 4.90 (1H, broad s), 5.24 (1H, s), 5.45 (1H, s), 5.95 (1H, s).

**Example 5**

NMR of ΔGlcA-Gal-Gal-Xyl-Ser, obtained according to the present invention.

Spectrum in $D_2O$, 500 MHz (δ in ppm): 3.30 (1H, t, 7Hz), 3.34 (1H, t, 8Hz), 3.55 (1H, t, 7Hz), 3.60 (1H, t, 7Hz), between 3.63 and 3.85 (10H, m), 3.91 (2H, m), 3.96 (1H, dd, 7 and 2Hz), between 4.02 and 4.10 (3H, m), 4.12 (1H, d, 2Hz), 4.18 (1H, m), 4.40 (1H, d, 6Hz), 4.46 (1H, d, 6Hz), 4.61 (1H, d, 6Hz), 5.29 (1H, d, 3Hz), 5.85 (1H, d, 3Hz).

**Example 6: Principle of the Quantification**

The 1,6-anhydro content in the chromatogram obtained with the reduced solution is determined by the normalized area percentage method.

The molar absorptivity coefficient of the unsaturated uronic acids is taken as constant, and consequently the response factor of a polysaccharide is proportional to its molecular mass.

In the methods according to the invention, the widely accepted hypothesis that all the unsaturated oligosaccharides contained in the mixture have the same molar absorptivity, equal to 5500 $mol^{-1}.l.cm^{-1}$, is made.

The two coeluted 1,6-anhydro residues, disaccharides 1 and 2, are integrated together.

It is therefore possible to determine the percentage by weight of all the constituents of the depolymerized mixture in the starting unfractionated heparin or fractionated heparin, for example constituents such as 1,6-anhydro derivatives or acetylated sugar derivatives. For the four 1,6-anhydro derivatives, namely disaccharide 1, disaccharide 2, disaccharide 3, and tetrasaccharide 1, that correspond to the peaks 7, 8, 13, and 19, the following

$$\%w/w_{7+8} = 100\cdot\frac{433\cdot(Area_7 + Area_8)}{\sum Mw_x\cdot Area_x}$$

$$\%w/w_{13} = 100\cdot\frac{545\cdot Area_{13}}{\sum Mw_x\cdot Area_x}$$

$$\%w/w_{19} = 100\cdot\frac{1210\cdot Area_{19}}{\sum Mw_x\cdot Area_x}$$

percentages by weight were obtained:

$Area_7$, $Area_8$, $Area_{13}$ and $Area_{19}$ correspond to the areas of each of the peaks 7, 8, 13, and 19. The molar masses of each of these 4 compounds are 443, 443, 545 and 1210 respectively. $\Sigma Mw_x \cdot Area_x$ corresponds to the ratio of the area of each peak of the chromatogram by the molar mass of the corresponding product.

If $M_w$ is the mean mass of the low-molecular-weight heparin studied, the percentage of oligosaccharide chains ending with a 1,6-anhydro ring is obtained in the following manner:

$$\%_{1.6anhydro} = M_W \cdot \left( \frac{\% w/w_{7+8}}{443} + \frac{\% w/w_{13}}{545} + \frac{\% w/w_{19}}{1210} \right)$$

Similarly, the percentage by weight of other components in a sample of material chosen from unfractionated heparins and fractionated heparins can be determined.

The exact molecular mass is attributed to all the identified peaks on the chromatograms (see Table 1):

Table 1

| Oligosaccharide | Oligosaccharide after reduction | Molecular mass |
|---|---|---|
| 1 | 1 | 741 |
| 2 | 20 | 401 |
| 3 | 3 | 734 |
| 4 | 21 | 461 |
| 5 | 22 | 461 |
| 6 | 23 | 503 |
| 7 | 7 | 443 |
| 8 | 8 | 443 |
| 9 | 24 | 503 |
| 10 | 25 | 563 |
| 11 | 26 | 563 |
| 12 | 27 | 563 |
| 13 | 13 | 545 |
| 14 | 28 | 605 |
| 15 | 29 | 1066 |
| 16 | 30 | 665 |
| 17 | 31 | 965 |
| 18 | 32 | 1168 |
| 19 | 19 | 1210 |

The following is the nomenclature of the saccharides that corresponds with the peak numbers of Figures 2 and 3

1: ΔGlcA$\beta_{1-3}$ Gal $\beta_{1-3}$ Gal$\beta_{1-4}$ Xyl β1-o-Ser

2: 4-deoxy-α-L-threo-hex-enepyranosyluronic acid-(1→4)-2-deoxy-2-acetamido-α-D-glucopyranosyl sodium salt

3: ΔGlcA$\beta_{1-3}$ Gal $\beta_{1-3}$ Gal$_{\beta-4}$ Xyl $\beta_1$-O-$CH_2$-COOH

4: 4-deoxy-α-L-threo-hex-4-enegalactopyranosyluronic acid-(1→4)-2-deoxy-2-sulfamido-β-D-glucopyranose disodium salt

5: 4-deoxy-α-L-threo-hex-enepyranosyluronic acid-(1→4)-2-deoxy-2-sulfamido-α-D-glucopyranosyl sodium salt

6: 4-deoxy-α-L-threo-hex-enepyranosyluronic acid-(1→4)-2-deoxy-2-acetamido-6-O-sulfo-α-D-glucopyranosyl disodium salt

7: 4-deoxy-α-L-threo-hex-4-enepyranosyluronic acid-(1→4)-1,6-anhydro-2-deoxy-2-sulfamido-β-D-glucopyranose disodium salt (disaccharide 1)

8: 4-deoxy-α-L-threo-hex-4-enepyranosyluronic acid-(1→4)-1,6-anhydro-2-deoxy-2-sulfamido-β-D-mannopyranose disodium salt (disaccharide 2)
9: 4-deoxy-2-O-sulfo-α-L-threo-hex-enepyranosyluronic acid-(1→4)-2-deoxy-2-acetamido-α-D-glucopyranosyl disodium salt
10: 4-deoxy-α-L-threo-hex-4-enegalactopyranosyluronic acid-(1→4)-2-deoxy-2-sulfamido-6-O-sulfo-β-D-glucopyranose trisodium salt
11: 4-deoxy-α-L-threo-hex-enepyranosyluronic acid-(1→4)-2-deoxy-2-sulfamido-6-O-sulfo-β-D-glucopyranosyl trisodium salt
12: 4-deoxy-2-O-sulfo-α-L-threo-hex-enepyranosyluronic acid-(1→4)-2-deoxy-2-suffamido-α-D-glucopyranosyl trisodium salt
13: 4-deoxy-2-O-sulfo-α-L-threo-hex-4-enepyranosyluronic acid-(1→4)-1,6-anhydro-2-deoxy-2-sulfamido-β-D-glucopyranose trisodium salt (Disaccharide 3)
14: 4-deoxy-2-O-sulfo-α-L-threo-hex-enepyranosyluronic acid-(1→4)-2-deoxy-2-acetamido-6-O-sulfo-α-D-glucopyranosyl trisodium salt
15: 4-deoxy-α-L-threo-hex-enepyranosyluronic acid-(1→4)-2-deoxy-2-acetamido-6-O-sulfo-α-D-glucopyranosyl-(1→4)-β-D-glucopyranosyluronic acid-(1→4)-2-deoxy-2-sulfamido-3-O-sulfo-α-D-glucopyranosyl) pentasodium salt
16: 4-deoxy-2-O-sulfo-α-L-threo-hex-enepyranosyluronic acid-(1→4)-2-deoxy-2-sulfamido-6-O-sulfo-α-D-glucopyranosyl tetrasodium salt
17: 4-deoxy-α-L-threa-hex-enepyranosyluronic acid-(1→4)-2-deoxy-2-acetamido-6-0-su lfo-a.-D-glucopyranosyl-(4)-β-D-glucopyranosyluronic acid-(1→4)-2-deoxy-2-sulfamido-3,6-di-O-sulfo-α-D-glucopyranosyl) hexasodium salt
18: 4-deoxy-2-O-sulfo-α-L-threo-hex-enepyranosyluronic acid-(1→4)-2-deoxy-2-sulfamido-6-O-sulfo-D-glucopyranosyl-(1→4)-2-O-sulfo-α-L-idopyranosyluronic acid hexasodium salt
19: 4-deoxy-2-O-sulfo-α-L-threo-hex-enepyranosyluronic acid-(1→4)-2-deoxy-2-sulfamido-6-O-sulfo-α-D-glucopyranosyl-(1→4)-2-O-sulfo-α-L-idopyranosyluronic acid-(1→4)-1,6-anhydro-2-deoxy-sulfamido-β-D-mannopyranose, hexasodium salt (tetrasaccharide 1)
20: 4-deoxy-α-L-threo-hex-enepyranosyluronic acid-(1→4)-2-deoxy-2-acetamido-α-D-glucitol sodium salt
21: 4-deoxy-α-L-threo-hex-enepyranosyluronic acid-(1→4)-2-deoxy-2-sulfamido-β-D-glucitol disodium salt
22: 4-deoxy-α-L-threo-hex-enepyranosyluronic acid-(1→4)-2-deoxy-2-sulfamido-α-D-glucitol disodium salt t
23: 4-deoxy-α-L-threo-hex-enepyranosyluronic acid-(1→4)-2-deoxy-2-acetamido-6-O-sulfo-α-D-glucitol disodium salt
24: 4-deoxy-2-O-sulfo-α-L-threo-hex-enepyranosyluronic acid-(1→4)-2-deoxy-2-acetamido-α-D-glucitol disodium salt
25: 4-deoxy-α-L-threo-hex-enegalactopyranosyluronic acid-(1→4)-2-deoxy-2-suifamido-6-O-suifo-β-D-glucitot trisodium salt
26: 4-deoxy-α-L-threo-hex-enepyranosyluronic acid-(1→4)-2-deoxy-2-sulfamido-6-O-sulfo-α-D-glucitol trisodium salt
27: 4-deoxy-2-O-sulfo-α-L-threo-hex-enepyranosyluronic acid-(1→4)-2-deoxy-2-sulfamido-α-D-glucitol trisodium salt
28: 4-deoxy-2-O-sulfo-α-L-threo-hex-enepyranosyluronic acid-(1→4)-2-deoxy-2-acetamido-6-0-sulfo-α-D-glucitol trisodium salt
29: 4-deoxy-α-L-threo-hex-enepyranosyluronic acid-(1→4)-2-deoxy-2-acetamido-6-O-sulfo-α-D-glucopyranosyl-(1→4)-β-D-glucopyranosyluronic acid-(1→4)-2-deoxy-2-sulfamido-3-O-sulfo-α-D-glucitol) pentasodium salt
30: 4-deoxy-2-O-sulfo-α-L-threo-hex-enepyranosyluronic acid-(1→4)-2-deoxy-2-sulfamido-6-O-sulfo-α-D-glucitol trisodium salt
31: 4-deoxy-α-L-threo-hex-enepyranosyluronic acid-(1→4)-2-deoxy-2-acetamido-6-O-sulfo-α-D-glucopyranosyl-(1→4)-β-D-glucopyranosyluronic acid-(1→4)-2-deoxy-2-sulfamido-3,6-di-O-sulfo-α-D-glucitol) hexasodium salt
32: 4-deoxy-2-O-sulfo-α-L-threo-hex-enepyranosyluronic acid-(1→4)-2-deoxy-2-sulfamido-6-O-sulfo-α-D-glucopyranosyl-(1→4)-2-O-sulfo-α-L-idopyranosyluronic acid hexasodium salt (form reduced with $NaBH_4$).

Abbreviations Used:

IdoA: α-L-Idopyranosyluronic acid;

GlcA: β-D-Glucopyranosyluronic acid;
ΔGlcA: 4,5-unsaturated acid: 4-deoxy-α-L-*threo*-hex-enepyranosyluronic acid;
Gal: D-Galactose;
Xyl: xylose;
GlcNAc: 2-deoxy-2-acetamido-α-D-glucopyranose;
GlcNS: 2-deoxy-2-sulfamido-α-D-glucopyranose;
2S: 2-O-sulfate,
3S: 3-O-sulfate,
6S: 6-O-sulfate.

The present invention may be embodied in other specific forms without departing from the spirit or essential attributes thereof.

## Claims

1. A method for quantifying the amount of components in a sample of material selected from unfractionated heparins and fractionated heparins, comprising:

   (a) depolymerizing said sample by an enzymatic method; and
   (b) detecting the quantity of the components in the depolymerized sample of step (a) by high-performance liquid chromatography.

2. The method as claimed in claim 1, wherein the enzymatic method is carried out using at least one heparinase.

3. The method as claimed in claim 1, wherein the enzymatic method is carried out using a mixture of heparinase 1 (EC 4.2.2.7.), heparinase 2 (heparin lyase II), and heparinase 3 (EC 4.2.2.8.).

4. The method as claimed in claim 1, wherein the fractionated heparin is enoxaparin sodium.

5. The method as claimed in claim 1, wherein the high performance liquid chromatography used in step (b) is anion-exchange chromatography.

6. The method as claimed in claim 1, wherein the high performance liquid chromatography used in step (b) is strong anion exchange chromatography (SAX).

7. The method as claimed in claim 6, wherein the strong anion exchange chromatography is carried out using a Spherisorb® SAX column.

8. The method as defined in claim 1, wherein the high-performance liquid chromatography is carried out in a mobile phase which is transparent to UV light with wavelengths from about 200 nm to about 400 nm.

9. The method as claimed in claim 1, wherein the high-performance liquid chromatography is carried out in a mobile phase which comprises at least one salt chosen from sodium perchlorate, methanesulfonate salts, and phosphate salts.

10. The method as claimed in claim 1, wherein the high-performance liquid chromatography is carried out in a mobile phase which comprises sodium perchlorate salts.

11. The method as claimed in claim 6, wherein the strong anion exchange chromatography is carried out at a pH of about 2.0 to about 6.5.

12. The method as claimed in claim 6, wherein the strong anion exchange chromatography is carried out at a pH of about 3.

13. The method as claimed in claim 1, wherein the mobile phase comprises a sodium perchlorate solution that is maintained at about pH 3.0.

**14.** The method as claimed in claim 1, wherein the depolymerized sample comprises at least one oligosaccharide chain selected from any one of the following

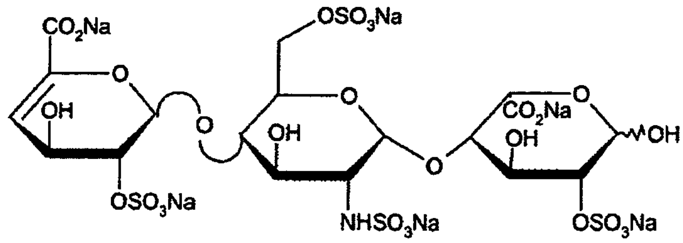

**trisaccharide 1**

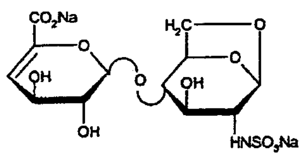

**disaccharide 1**

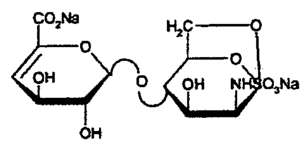

**disaccharide 2**

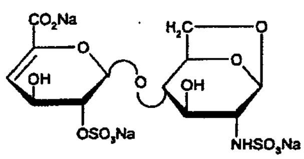

**disaccharide 3**

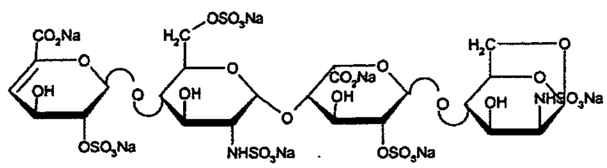

**tetrasaccharide 1**

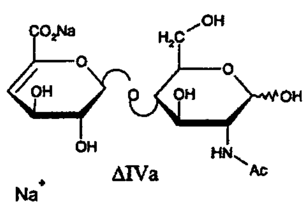

ΔIVa

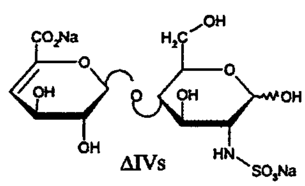

ΔIVs

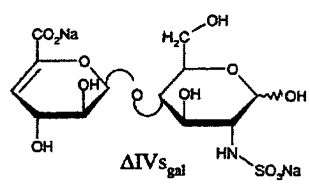

$\Delta IVs_{gal}$

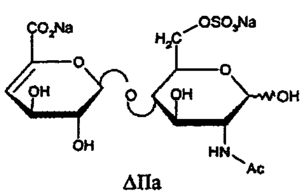

ΔIIa

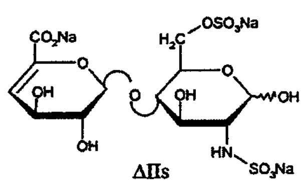

ΔIIs

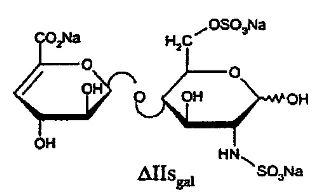

$\Delta IIs_{gal}$

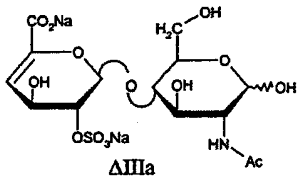

ΔIIIa

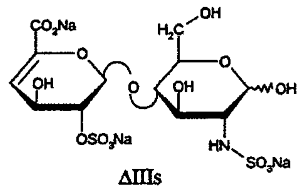

ΔIIIs

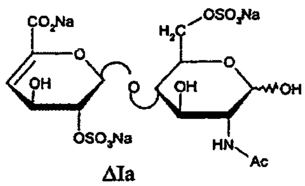

ΔIa

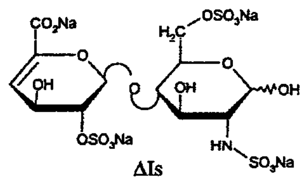

ΔIs

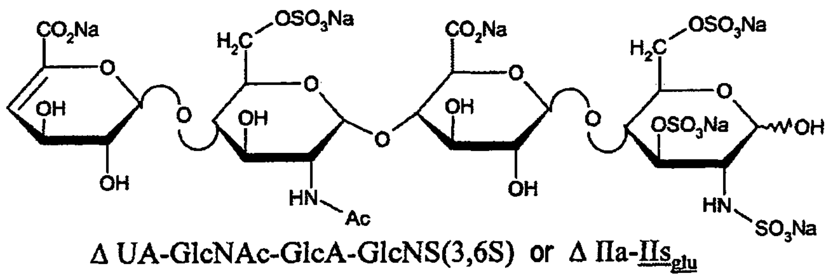

Δ UA-GlcNAc-GlcA-GlcNS(3,6S) or Δ IIa-$\underline{\text{IIs}}_{glu}$

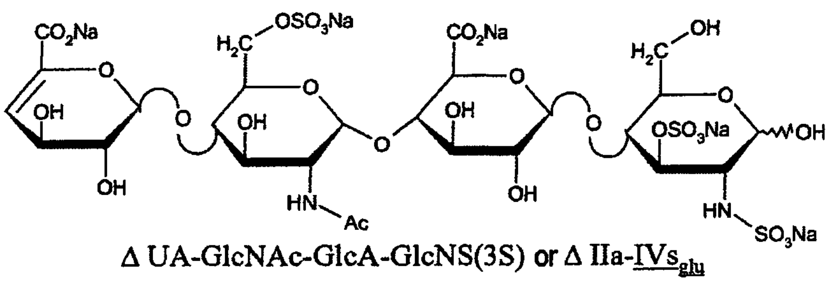

Δ UA-GlcNAc-GlcA-GlcNS(3S) or Δ IIa-$\underline{\text{IVs}}_{glu}$

;

and

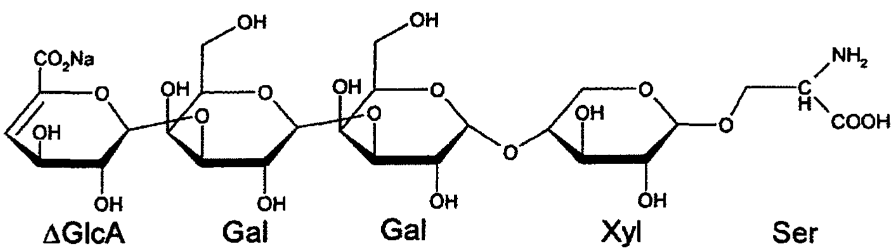

ΔGlcA Gal Gal Xyl Ser

**15.** The method as claimed in claim 1 wherein the depolymerized sample comprises at least one oligosaccharide chain whose end is modified with a 1,6-anhydro bond.

**16.** The method as claimed in claim 15, wherein the at least one oligosaccharide chain is chosen from any of the

following

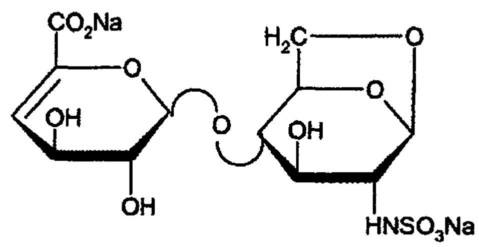

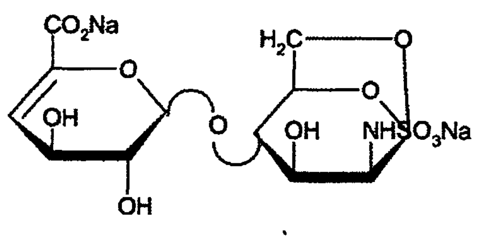

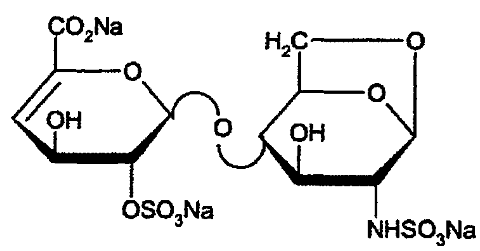

or

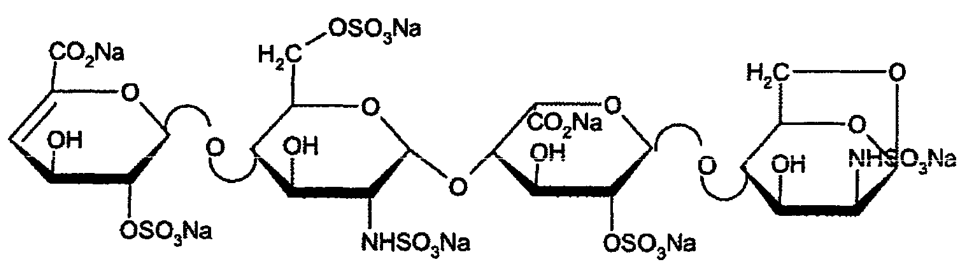

**17.** The method as claimed in claim 4, wherein the depolymerized sample comprises at least one 1,6-anhydro residue chosen from any of the following:

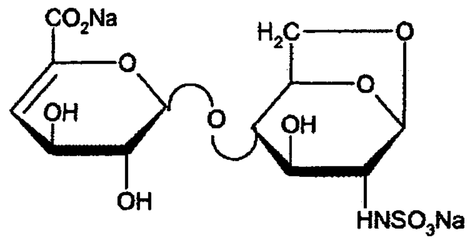

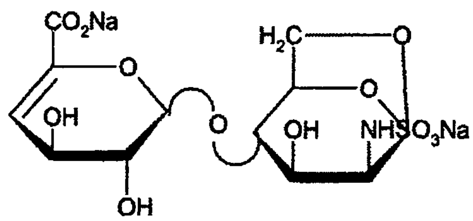

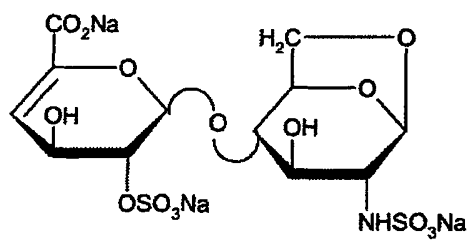

and

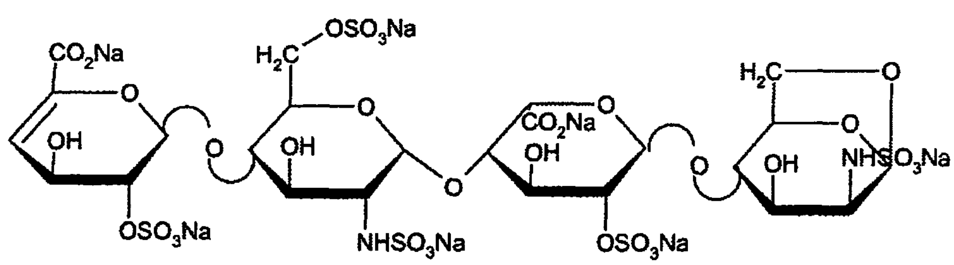

18. The method as claimed in claim 17, wherein the at least one 1,6-anhydro residue ranges from 15% to 25% of the weight average molecular weight of the sample.

19. The method as claimed in claim 1, wherein the components detected in the depolymerized sample of step (b) are acetylated sugars.

20. The method as claimed in claim 19, wherein the acetylated sugars are selectively detected by subtracting an absorbance measured at a wavelength at which both acetylated and nonacetylated sugars absorb from an absorbance measured at a wavelength at which acetylated but not nonacetylated sugar absorbs.

21. The method as claimed in claim 19, wherein the acetylated sugars detected are selected from acetylated oligosaccharides ΔIVa, ΔIIa, ΔIIIa, ΔIa, ΔIIa-$\underline{IVs}_{glu}$, $\underline{and}$ ΔIIa-$\underline{IIs}_{glu}$.

22. A method for quantifying the amount of 1,6-anhydro residues in a sample of enoxaparin sodium, comprising:

(a) depolymerizing said sample using a mixture of heparinase 1 (EC 4.2.2.7.), heparinase 2 (heparin lyase II), and heparinase 3 (EC 4.2.2.8.); and
(b) detecting the quantity of the 1,6-anhydro residues in the depolymerized sample of step (a) by high-performance liquid chromatography.

**23.** A method as claimed in claim 22, wherein the quantity of the 1,6-anhydro residues range from 15% to 25% of the mean oligosaccharide molecular weight of the sample.

**24.** A method for quantifying the amount of components in a sample of material chosen from unfractionated heparins and fractionated heparins, comprising:

(a) depolymerizing said sample by an enzymatic method; and
(b) reducing the depolymerized sample of step (a);
(c) detecting the quantity of the components in the reduced sample of (b) by high-performance liquid chromatography.

**25.** The method as claimed in claim 24, wherein the enzymatic method is carried out using at least one heparinase.

**26.** The method as claimed in claim 24, wherein enzymatic method is carried out using a mixture of heparinase 1 (EC 4.2.2.7.), heparinase 2 (heparin lyase II), and heparinase 3 (EC 4.2.2.8.).

**27.** The method as claimed in claim 24, wherein reducing the depolymerized sample of step (a) is carried out by exposure to a reducing agent.

**28.** The method as claimed in claim 27, wherein the reducing agent is $NaBH_4$ or an alkali metal salt of the borohydride anion.

**29.** The method as claimed in claim 24, wherein the fractionated heparin is enoxaparin sodium.

**30.** The method as claimed in claim 27, wherein the reducing reduces the reducing ends of enoxaparin sodium which are not in the 1,6-anhydro form.

**31.** The method as claimed in claim 24, wherein the high performance liquid chromatography used in step (c) is anion-exchange chromatography.

**32.** The method as claimed in claim 24, wherein the high performance liquid chromatography used in step (c) is strong anion exchange chromatography (SAX).

**33.** The method as claimed in claim 32, wherein the strong anion exchange chromatography is carried out using a Spherisorb® SAX column.

**34.** The method as defined in claim 24, wherein the the high-performance liquid chromatography is carried out in a mobile phase which is transparent to UV light with wavelengths from about 200 nm to about 400 nm.

**35.** The method as claimed in claim 24, wherein the high-performance liquid chromatography is carried out in a mobile phase which comprises at least one salt chosen from sodium perchlorate, methanesulfonate salts, and phosphate salts.

**36.** The method as claimed in claim 24, wherein the high-performance liquid chromatography is carried out in a mobile phase which comprises sodium perchlorate salts.

**37.** The method as claimed in claim 32, wherein the strong anion exchange chromatography is carried out at a pH of about 2.0 to about 6.5.

**38.** The method as claimed in claim 32, wherein the strong anion exchange chromatography is carried out at a pH of about 3.

**39.** The method as claimed in claim 24, wherein the high performance liquid chromatography utilizes a mobile phase

comprising a sodium perchlorate solution that is maintained at about pH 3.0.

**40.** The method as claimed in claim 28, wherein the depolymerized sample comprises at least one oligosaccharide chain selected from any of the following:

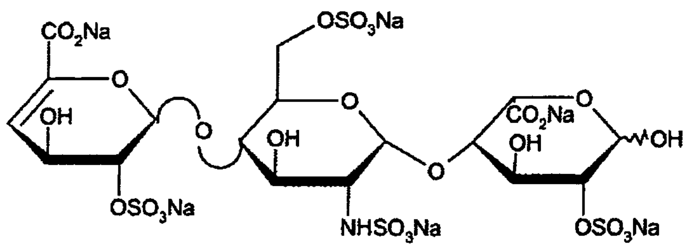

trisaccharide 1

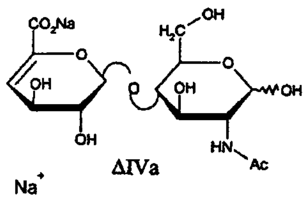

ΔIVa

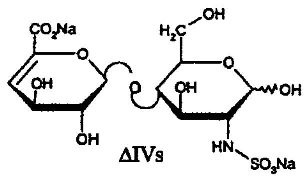

ΔIVs

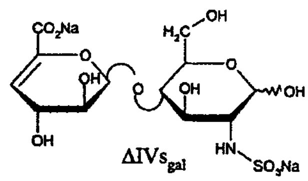

$\Delta IVs_{gal}$

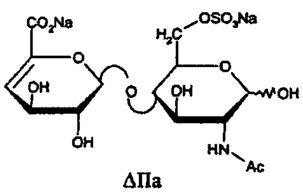

ΔIIa

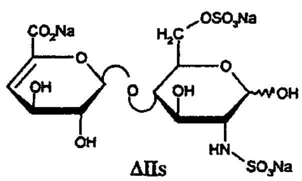

ΔIIs

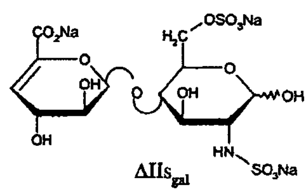

$\Delta IIs_{gal}$

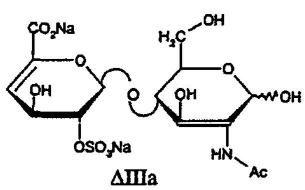

ΔIIIa

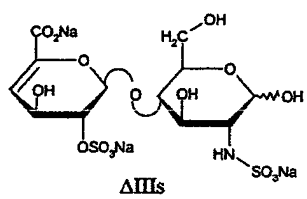

ΔIIIs

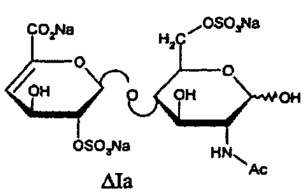

ΔIa

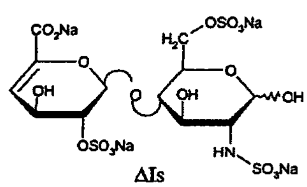

ΔIs

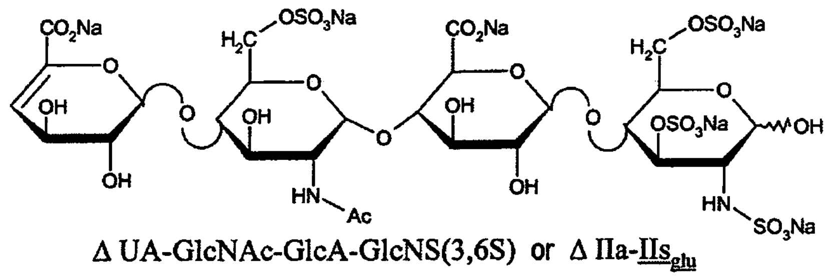

Δ UA-GlcNAc-GlcA-GlcNS(3,6S) or Δ IIa-$\underline{IIs}_{glu}$

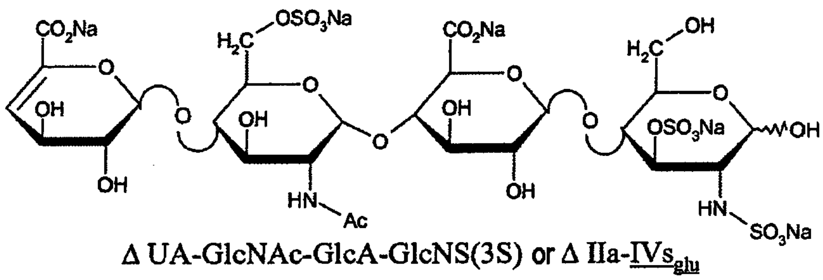

Δ UA-GlcNAc-GlcA-GlcNS(3S) or Δ IIa-$\underline{IVs}_{glu}$ ;

and

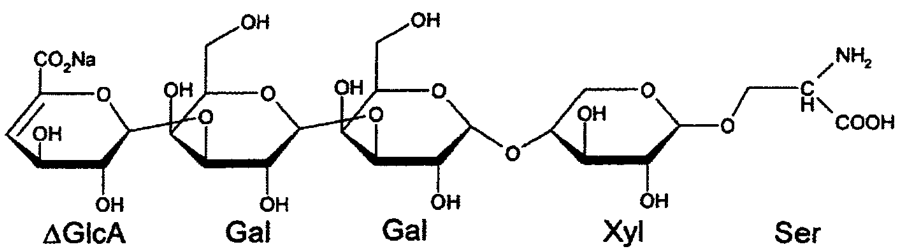

ΔGlcA Gal Gal Xyl Ser

; wherein the oligosaccharide chain is in its reduced form.

**41.** The method as claimed in claim 24 wherein the depolymerized sample comprises at least one oligosaccharide chain whose end is modified with a 1,8-anhydro bond.

**42.** The method as claimed in claim 41, wherein the at least one oligosaccharide chain is chosen from any of the following:

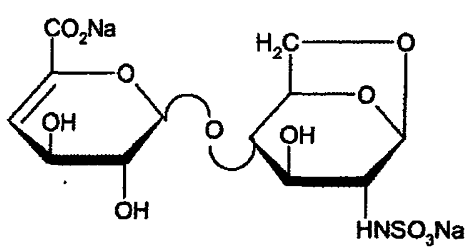

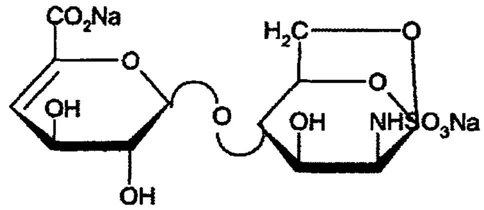

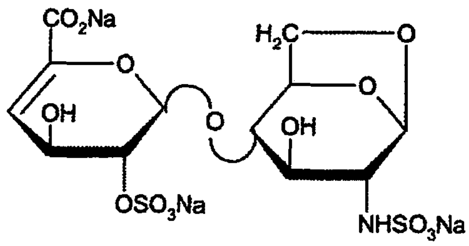

or

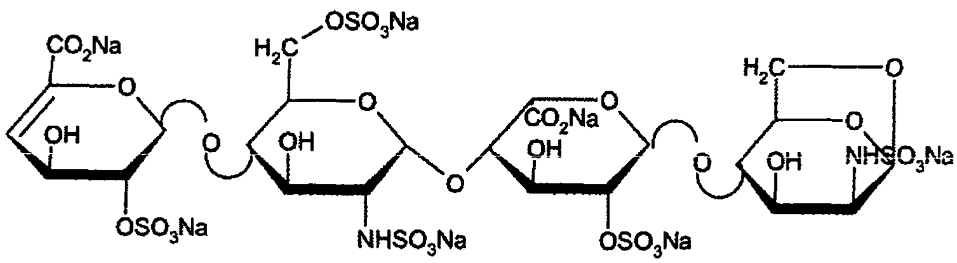

**43.** The method as claimed in claim 29, wherein the depolymerized sample comprises a mixture of 1;6-anhydro residues comprising:

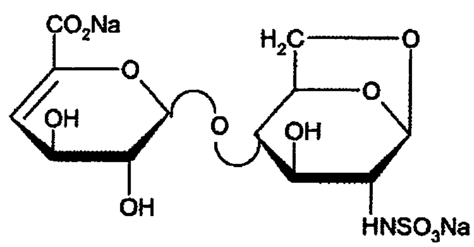

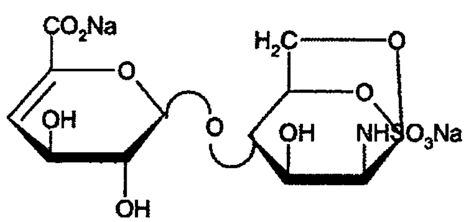

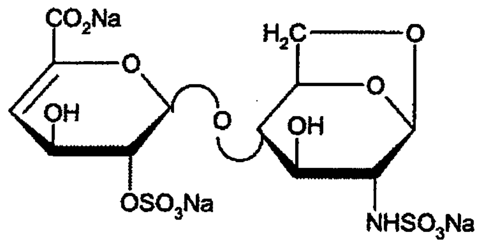

and

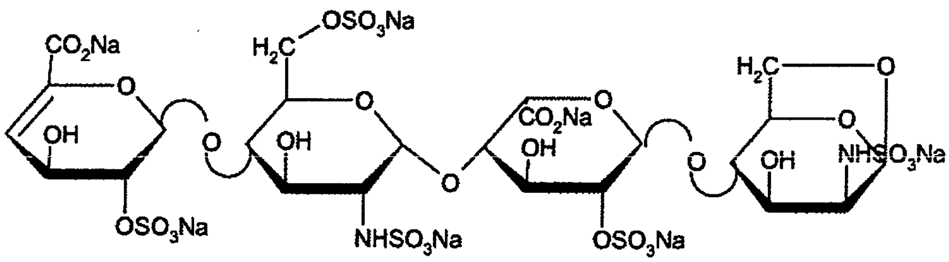

**44.** The method as claimed in claim 43, wherein the mixture of 1,6-anhydro residues range from 15% to 25% of the weight average molecular weight of the sample.

**45.** The method as claimed in claim 24, wherein the components detected in the depolymerized sample of step (b) are acetylated sugars.

**46.** The method as claimed in claim 45, wherein the sugars are selectively detected by subtracting an absorbance measured at a wavelength at which both acetylated and nonacetylated sugars absorb from an absorbance measured at a wavelength at which acetylated but not nonacetylated sugar absorbs.

**47.** The method as claimed in claim 45, wherein the acetylated sugars detected are selected from acetylated oligosaccharides ΔIVa, ΔIIa, ΔIIIa, ΔIa, ΔIIa-$IVS_{glu}$ and +ΔIIa-$IIS_{glu}$.

**48.** A method for quantifying the amount of 1,6-anhydro residues in a sample of enoxaparin sodium, comprising:

(a) depolymerizing said sample using a mixture of heparinase 1 (EC 4.2.2.7.), heparinase 2 (heparin lyase II), and heparinase 3 (EC 4.2.2.8.);
(b) reducing the depolymerized sample of step (a); and
(b) detecting the quantity of the 1,6-anhydro residues in the reduced sample of step (b) by high-performance liquid chromatography.

**49.** A method as claimed in claim 48, wherein the quantity of the 1,6-anhydro residues range from 15% to 25% of the weight average molecular weight of the sample.

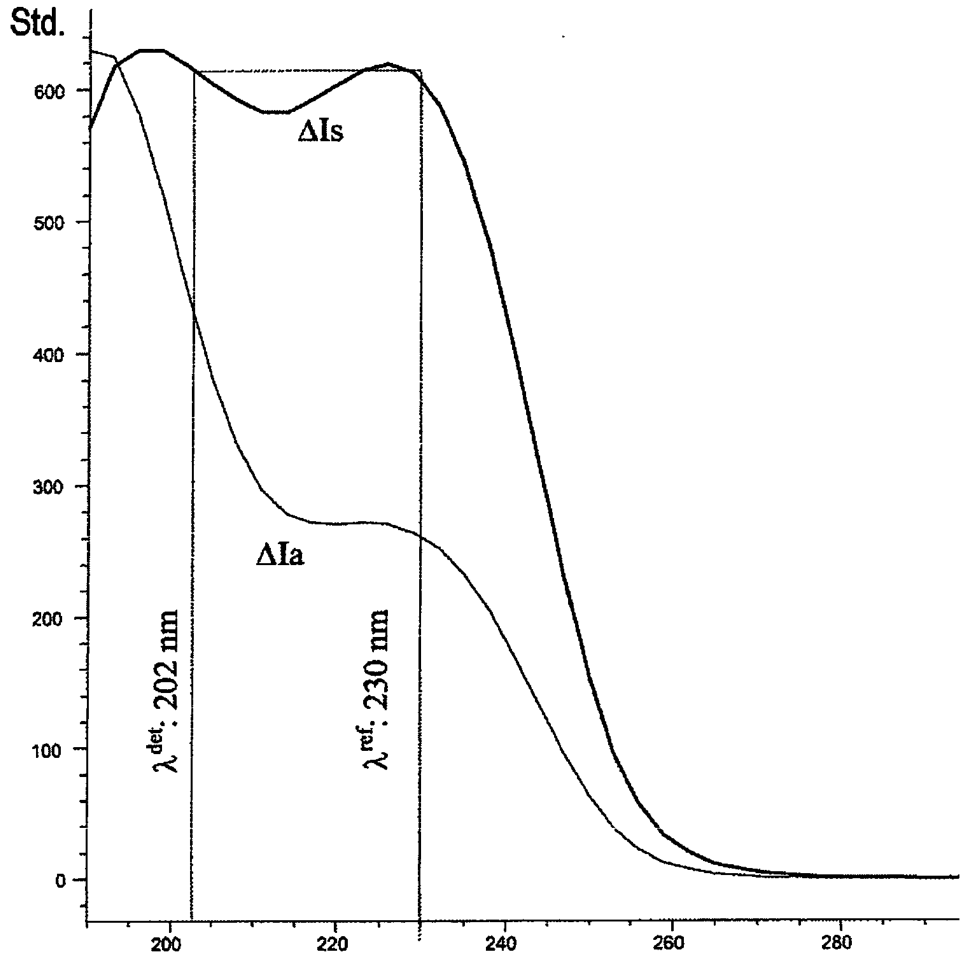
Std.
600
500
400
300
200
100
0
ΔIs
ΔIa
λdet.: 202 nm
λref.: 230 nm
200
220
240
260
280

**Figure 1**

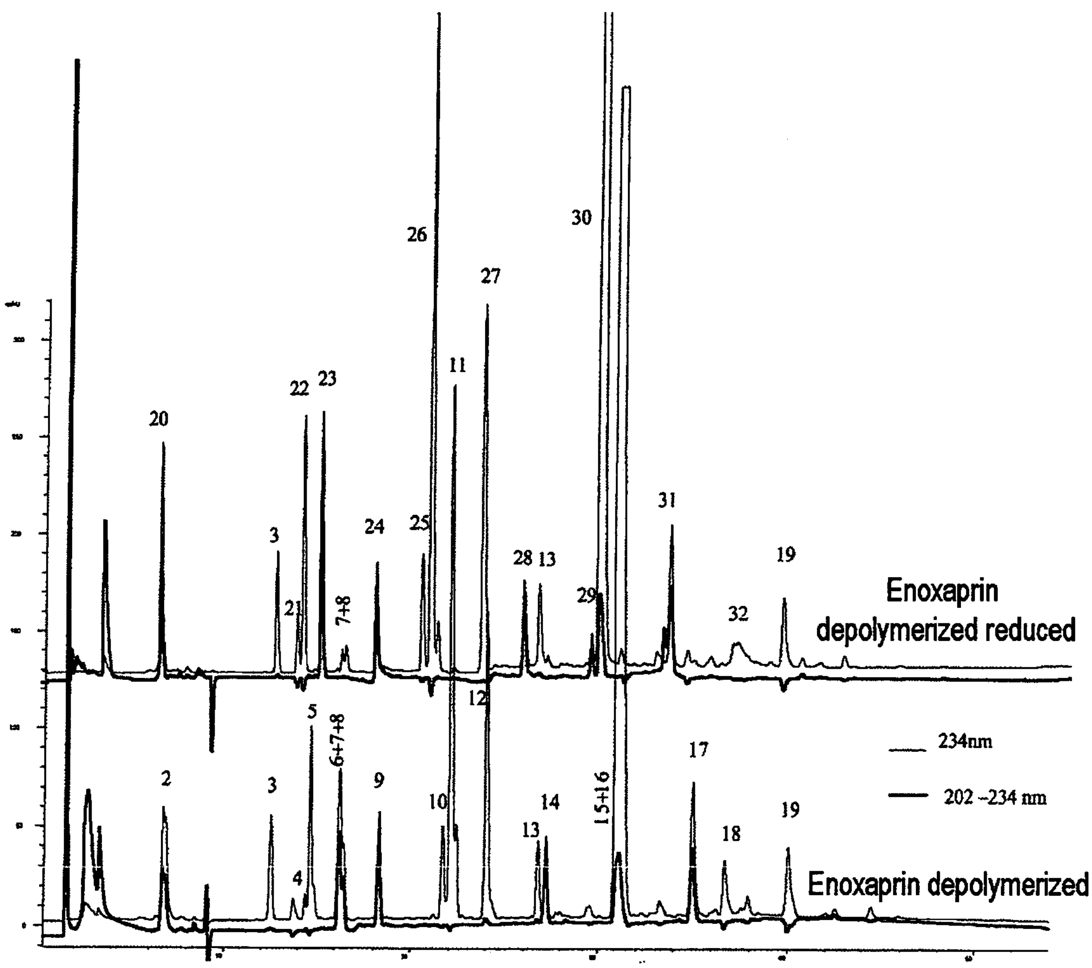
26
30
27
11
22
23
20
31
3
24
25
28
13
19
21
7+8
29
Enoxaprin
depolymerized reduced
32
12
5
6+7+8
234nm
202 -234 nm
2
3
9
17
10
14
15+16
19
13
18
4
Enoxaprin depolymerized

**Figure 2**

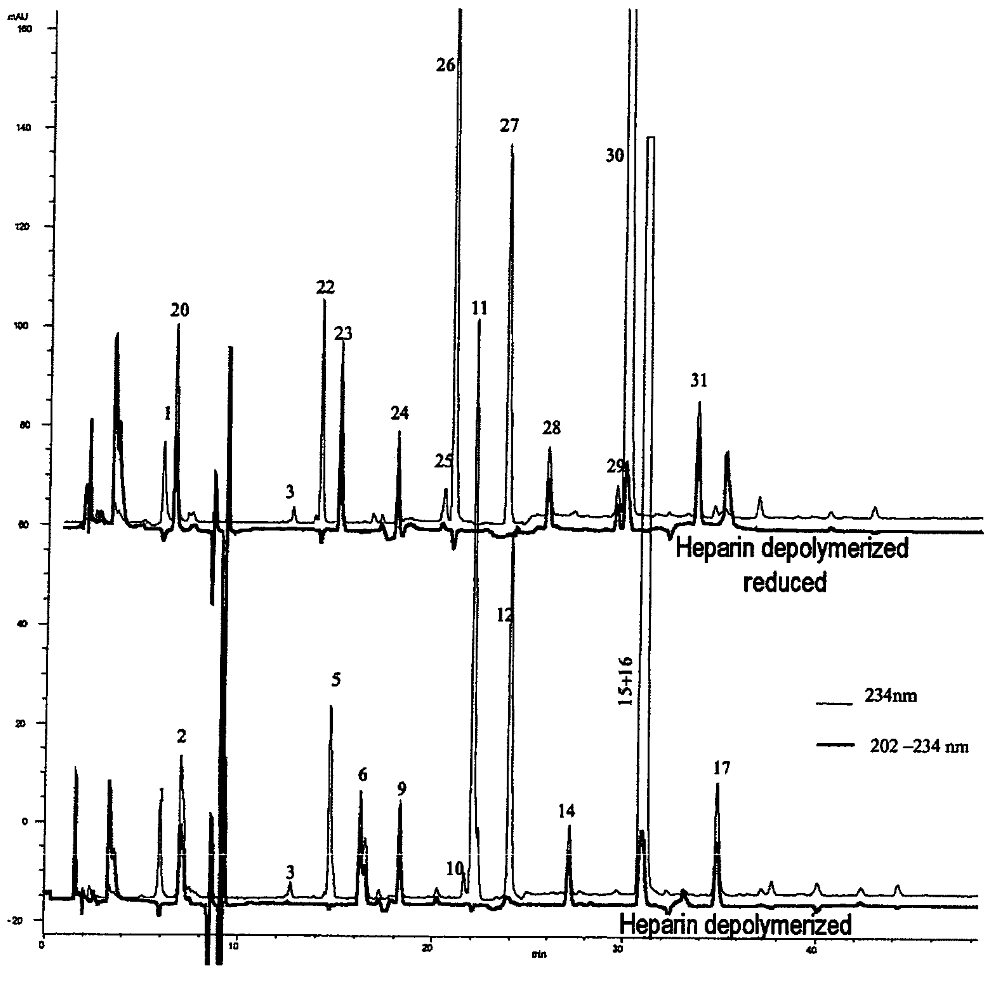
mAU
160
140
120
100
80
60
40
20
0
-20
0
10
20
min
30
40
26
27
30
22
20
11
23
31
1
24
28
25
29
3
Heparin depolymerized
reduced
12
15+16
5
234nm
2
202 –234 nm
17
6
9
14
3
10
Heparin depolymerized

Figure 3

European Patent Office

# EUROPEAN SEARCH REPORT

Application Number
EP 04 29 0790

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 95/33468 A (LARNKJAER ANNI ; OESTERGAARD PER BJOERN (DK)) 14 December 1995 (1995-12-14) * page 5, lines 12-16; examples 1,2 * | 1-49 | C08B37/00 |
| X | THANAWIROON CHARUWAN ET AL: "Liquid chromatography/mass spectrometry sequencing approach for highly sulfated heparin-derived oligosaccharides." 23 January 2004 (2004-01-23), JOURNAL OF BIOLOGICAL CHEMISTRY, VOL. 279, NR. 4, PAGE(S) 2608-2615 , XP002297923 ISSN: 0021-9258 * the whole document * | 1,22,24, 48 | |
| X | IMANARI T ET AL: "High-performance liquid chromatographic analysis of glycosaminoglycan-derived oligosaccharides" JOURNAL OF CHROMATOGRAPHY A, ELSEVIER SCIENCE, NL, vol. 720, no. 1, 12 January 1996 (1996-01-12), pages 275-293, XP004038365 ISSN: 0021-9673 * page 283 - page 286 * | 1,22,24, 48 | TECHNICAL FIELDS SEARCHED (Int.Cl.7)<br>C07B |

-/--

The present search report has been drawn up for all claims

| Place of search | Date of completion of the search | Examiner |
|---|---|---|
| Munich | 8 October 2004 | Komenda, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

European Patent Office

# EUROPEAN SEARCH REPORT

Application Number
EP 04 29 0790

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | VYNIOS D H ET AL: "Advances in analysis of glycosaminoglycans: its application for the assessment of physiological and pathological states of connective tissues" JOURNAL OF CHROMATOGRAPHY B: BIOMEDICAL SCIENCES & APPLICATIONS, ELSEVIER SCIENCE PUBLISHERS, NL, vol. 781, no. 1-2, 5 December 2002 (2002-12-05), pages 21-38, XP004394146 ISSN: 1570-0232 * the whole document * ----- | 1,22,24, 48 | |
| X | THANAWIROON C ET AL: "Separation of a complex mixture of heparin-derived oligosaccharides using reversed-phase high-performance liquid chromatography" JOURNAL OF CHROMATOGRAPHY A, ELSEVIER SCIENCE, NL, vol. 1014, no. 1-2, 3 October 2003 (2003-10-03), pages 215-223, XP004456355 ISSN: 0021-9673 * the whole document * ----- | 1,22,24, 48 | TECHNICAL FIELDS SEARCHED (Int.Cl.7) |
| A,D | WO 01/29055 A (AVENTIS PHARMA SA) 26 April 2001 (2001-04-26) * example A * ----- | 22 | |

The present search report has been drawn up for all claims

| Place of search | Date of completion of the search | Examiner |
|---|---|---|
| Munich | 8 October 2004 | Komenda, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 04 29 0790

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2004

| Patent document cited in search report | Publication date | Patent family member(s) | Publication date |
|---|---|---|---|
| WO 9533468 A | 14-12-1995 | AU 2560995 A | 04-01-1996 |
| | | WO 9533468 A1 | 14-12-1995 |
| WO 0129055 A | 26-04-2001 | FR 2800074 A1 | 27-04-2001 |
| | | AU 7930200 A | 30-04-2001 |
| | | BR 0014939 A | 18-06-2002 |
| | | CA 2388369 A1 | 26-04-2001 |
| | | CN 1379781 T | 13-11-2002 |
| | | CZ 20021385 A3 | 17-07-2002 |
| | | EA 4046 B1 | 25-12-2003 |
| | | EE 200200208 A | 16-06-2003 |
| | | EP 1226148 A2 | 31-07-2002 |
| | | WO 0129055 A2 | 26-04-2001 |
| | | HR 20020330 A2 | 30-04-2004 |
| | | HU 0203821 A2 | 28-04-2003 |
| | | JP 2003512385 T | 02-04-2003 |
| | | NO 20021859 A | 13-06-2002 |
| | | SK 5272002 A3 | 06-08-2002 |
| | | TR 200201102 T2 | 23-12-2002 |
| | | US 6617316 B1 | 09-09-2003 |
| | | ZA 200203102 A | 18-07-2003 |

EPO FORM P0459

For more details about this annex : see Official Journal of the European Patent Office, No. 12/82